# EUROPÄISCHE PATENTSCHRIFT

(11) **EP 1 218 625 B1**
(45) Veröffentlichungstag und Bekanntmachung des Hinweises auf die Patenterteilung: **06.07.2005**
(21) Anmeldenummer: 00967802.0
(22) Anmeldetag: 27.09.2000
(51) Int. Cl.: F02B 17/00

(54) **DIREKTEINSPRITZENDE BRENNKRAFTMASCHINE MIT NOx-REDUZIERTER EMISSION**
DIRECT INJECTION INTERNAL COMBUSTION ENGINE WITH NOx-REDUCED EMISSIONS
MOTEURS A COMBUSTION INTERNE A INJECTION DIRECTE A EMISSIONS NOx REDUITES

(30) Priorität: 06.10.1999 DE 19948298
(43) Veröffentlichungstag der Anmeldung: 03.07.2002
(73) Patentinhaber: Volkswagen Aktiengesellschaft, 38436 Wolfsburg (DE)
(72) Erfinder: POTT, Ekkehard, 38518 Gifhorn (DE); KREBS, Rudolf, 86697 Oberhausen (DE); STIEBELS, Bernd, 38528 Adenbüttel (DE)
(74) Vertreter: Pohlmann, Bernd Michael
(86) Internationale Anmeldenummer: PCT/EP2000/009440
(87) Internationale Veröffentlichungsnummer: WO 2001/025605

(56) Entgegenhaltungen:
- EP-A- 0 897 741
- FR-A- 2 703 107
- GB-A- 2 317 644
- GB-A- 2 328 975
- US-A- 5 322 043
- US-A- 5 918 577

## Beschreibung

Die Erfindung betrifft eine direkteinspntzende Brennkraftmaschine gemäß dem Oberbegnff des Anspruchs 1.

Aus EP 0 560 991 B und EP 0 580 389 B sind Einrichtungen zur NOx-Minderung bei mager betnebenen Brennkraftmaschinen bekannt. Das Pnnzip hierbei ist die Speicherung des insbesondere während des Magerbetriebs der Brennkraftmaschine entstehenden NOx in einem NOx-Speicherkatalysator und Freisetzen des gespeicherten NOx unter gleichzeitiger Reduktion durch einen kurzzeitigen Fettbetrieb der Brennkraftmaschine. Diese NOx-Umsetzung eignet sich insbesondere auch bei direkteinspritzenden Brennkraftmaschinen. Mit der beschriebenen NOx-Umsetzung lassen sich bereits verhältnismäßig hohe Konversionsraten erreichen, wobei insbesondere zur Vermeidung der NOx-Rohemission eine Abgasrückführung in Kombination mit dem NOx-Speicherkatalysator eingesetzt werden kann.

Durch die Abgasrückführung wird die NOx-Rohemission grundsätzlich deutlich abgesenkt. Besonders wichtig ist diese Maßnahme bei mager betriebenen, direkteinspritzenden Ottomotoren mit NOx-reduzierendem Abgasnachbehandlungssystem, insbesondere NOx-Speicherkatalysatoren, da die Magerkonvertierung sehr hohe NOx-Rohemissionen, wie sie insbesondere im homogenen Magerbetrieb bei Lambda = 1,1 bis 1,4 oder auch im geschichteten Magerbetrieb bei Lambda = 1,6 bis 4 auftreten, selbst bei der Verwendung von NOx-Speicherkatalysatoren, möglicherweise als Folge einer Diffusionshemmung an der Speicherkatalysatoroberfläche, einbrechen kann

Weiterhin führt das rückgeführte Abgas zu einer Verschleppung der Verbrennung, die zum einen durch die abgesenkte Verbrennungstemperatur ebenfalls NOx-mindemd wirkt, zum anderen eine Verbesserung des Kraftstoffverbrauches bewirkt, da die Schwerpunktlage des Kraftstoffumsatzes, der typischerweise bei direkteinspritzenden Ottomotoren im geschichteten Magerbetrieb zu früh im Zyklus ist, in Richtung auf die optimale Position verschoben wird.

Das heiße, ruckgeführte Abgas kann außerdem bei geeigneter Dosierung auch zu einer Stabilisierung der Verbrennung im geschichteten Magerbetrieb führen, da die durch die Abgasruckführung erhöhte Temperatur die Gemischbildung, die prinzipbedingt durch die bei dieser Betriebsart späten Einspritzung auf sehr kleinen Zeitskalen ablaufen muß, unterstützt wird.

Der Anteil des rückgeführten Abgases im Brennraum darf jedoch auch nicht zu hoch gewählt werden, um genügend Frischgas für die Kraftstoffverbrennung bereit zu stellen Bei zu hohen Abgasrückfuhrraten erfolgt eine unvollstandige Verbrennung, wodurch der Verbrauch und HC/CO-Emissionen wieder zunehmen und die Laufruhe des Motors abnimmt.

Bei der üblicherweise durchgeführten externen Abgasrückführung (Abgreifen des Abgases nach der Brennkammer, insbesondere am Abgaskrümmer, und Rückleitung an die Saugseite der Brennkraftmaschine) ist eine homogene Verteilung des Abgases auf die einzelnen Zylinder konstruktiv nur mit hohem Aufwand möglich. Überdies ist die Abgasrückführrate in dem bei einer Brennkraftmaschine insbesondere vorliegenden dynamischen Betrieb durch die Zeitverzogerung der Abgasrückführleitung und des Saugrohrvolumens und die wechselnden Druckverhältnisse auf der Saug- und Abgasseite nur schwer an Soll-Vorgaben anzupassen und einzuregeln. Entsprechend kann sich die Abgasrückführrate zwischen den einzelnen Zylindern erheblich unterscheiden und ein Unterschreiten von unerwünschten Minimalwerten bzw. Überschreiten von unerwünschten Maximalwerten kann nicht sicher ausgeschlossen werden.

Alternativ oder zusätzlich zur externen Abgasrückführung ist die innere Abgasrückführung bekannt, bei der durch Verstellen der Einlaß- bzw. Auslaßzeiten zueinander, insbesondere durch Verstellen der Einlaßnockenwelle in Richtung "FRÜH", ein Verbleib eines Restgasanteils im Zylinder ermöglicht wird. Der Vorteil dieses Verfahrens ist neben der genauen zylinderindividuellen Zumessung, daß das Restgas bereits am nächsten Verbrennungsvorgang teil nimmt und die oben beschriebenen Totzeiten sowie die großen Abweichungen von einer Sollvorgabe weitgehend entfallen.

Aufgrund der höheren Temperatur des intern zurückgeführten Abgases ist auch der Einfluß auf die Gemischbildung deutlicher und kann gezielter genutzt werden.

Die beschriebenen Vorteile der inneren Abgasrückführung werden bei den ersten, sich Im Markt befindlichen direkteinspritzenden DI-Ottomotoren genutzt, die neben einer äußeren auch über eine innere Abgasrückführung mit Einlaß-Nockenwellenverstellung und eine Abgasreinigung mittels NOx-Speicherkatalysator aufweisen. Zur Gemischbildung kommt bei diesen Brennkraftmaschinen ein Swirlkonzept zur Ladungsbewegung zum Einsatz, bei dem den angesaugten Gasen im Zylinder eine Rotationsbewegung aufgezwungen wird, wobei die Rotationsachse annähernd parallel zur Kolbenbewegung/Zylinderachse verläuft. Dabei wird ein stehender Luftwirbel im Brennraum erzeugt, in den der Kraftstoffstrahl eingespritzt und zur Zündkerze geführt wird. Solche Brennverfahren weisen im Zusammenhang mit einem NOx-Speicherkatalysator bereits recht geringe NOx-Emissionen auf.

Aus der US-A-5/918 577 ist bereits eine direkteinspritzende Brennkraftmaschine mit Schichtbetrieb und einer Tumbleströmung ca. 80 Grad quer zur Kolbenlängsachse bekannt. Ferner wird eine Schichtung eines Inertgases beschrieben, die eine um die Zündkerze liegende Luft-Kraftstoffzone aufweist, in der wenig oder gar kein Inertgas vorliegt, sodaß keine Durchmischung des Frischluft-Kraftstoffgemisches mit dem durch eine innere oder äußere Abgasrückführung in den Brennraum der Brennkraftmaschine geführten Abgase stattfindet.

Aufgabe der vorliegenden Erfindung ist es, bei einer direkteinspritzenden Brennkraftmaschine mit NOx-reduzierender Abgasnachbehandlung den Brennablauf zusammen mit der Abgasnachbehandlung so zu optimieren, daß besonders niedrige NOx-Emissionswerte erhalten werden.

Gelöst wird diese Aufgabe bei der vorliegenden Erfindung mit der Kombination der Merkmale gemäß dem Anspruch 1.

Die Unteransprüche beschreiben weitere Merkmale, mit denen sich einzeln sowie in Kombination besonders günstige Emissionswerte erzielen lassen.

Erfindungsgemäß wird mit einer speziellen Kombination einzelner abgasreduzierender Schritte eine besonders niedrige Emission von Schadstoffen, Insbesondere von NOx, erreicht, so daß nunmehr auch bei direkteinspritzenden Brennkraftmaschinen niedrigste Abgasnormen, wie beispielsweise D4 erreicht werden können. Möglich wird dies bei einer direkteinspritzenden Brennkraftmaschine durch eine innere Abgasrückführung (EGR), Insbesondere in Kombination mit einer äußeren EGR, einer NOx-reduzierenden Abgasnachbehandlung sowie einer Drallbewegung der einströmenden (Frisch-) Gase, die überwiegend quer zur Kolbenbewegung veriäuft. Vorzugsweise kommt hier eine Tumblebewegung der einströmenden Gase zum Einsatz, die vorteilhaft durch ein Tumbleblech im Ansaugkanal erzeugt wird. Bei einer solchen Tumblebewegung stürzen die einströmenden Gase rollend in den Zylinderinnenraum, wobei die Rollbewegung um eine Achse quer zu Kolbenbewegung erfolgt. Der Einsatz eines Tumbleblechs erfolgt vorzugsweise mit einer bedarfsgerechten Umschaltung von einer Strömung mit Tumbledrall auf eine gewöhnliche Füllung des Zylinderraumes, wie es beispielsweise bei einem Lambda-1-Betrieb (Regeneration des Speicherkatalysators, hohe Motorlast) üblich ist

Durch die Kombination der inneren EGR mit der äußeren EGR kann eine weitere Anhebung der Abgasrückführrate erreicht werden, so daß mit niedrigstem Sauerstoffüberschuß gefahren werden kann. Hierbei ist es außerdem möglich, die äußere EGR mittels eines Abgasrückführungskühlers zu kühlen, so daß die Brennraumtemperatur nicht zu hoch ansteigt. Die äußere EGR wird üblicherweise mittels eines Ventils geregelt.

Erfindungsgemäß liegt die Drallachse vorzugsweise in einem Bereich ± 15° zur Kolbenbewegung, in diesem Bereich entstehen die niedrigsten NOx-Emissionen.

Insbesondere wird erfindungsgemäß zur NOx-reduzierenden Abgasnachbehandlung ein NOx-Speicherkatalysator eingesetzt, der über mehrere Sekunden (üblicherweise bis ca. 2 min.) die Stickoxide der Abgasrohemissionen speichert, beispielsweise als Bariummtrat, und unter Reduktion während eines Betriebes mit Lambda ≤ 1 (oder auch wenig über Lambda = 1) regeneriert wird. Solche Speicherkatalysatoren sind aus den Eingangs erwähnten europäischen Patentschriften bekannt.

Mit der vorliegenden Erfindung läßt sich besonders günstig ein NOx-Sensor nach dem NOx-reduzierenden Schritt der Abgasnachbehandlung einsetzen, insbesondere in Verbindung mit einem Speicherkatalysator. Bei den bisherigen Betriebssystemen ohne die Tumblebewegung waren leichte NOx-Durchbrüche möglich, die von dem NOx-Sensor fälschlich als zu regenerierender Speicherkatalysator ausgewertet wurden, so daß zu häufig eine Kraftstoffverbrauch steigernde Regeneration statt fand. Erst durch den Einsatz der Tumblebewegung wurden die NOx-Spitzen vermieden, so daß der NOx-Sensor nach dem Speicherkatalysator erst erfindungsgemäß verläßliche Speicherraten und damit Speicherfüllgrade des NOx-Speicherkatalysators signalisiert.

Erfindungsgemäß hat es sich gezeigt, daß zur optimalen NOx-Minderung eine moglichst gute Durchmischung des rückgeführten Abgases mit Fnschluft zu beachten ist, da nur so im gesamten Brennraum die an der NOx-Bildung beteiligten Sauerstoffmoleküle teilweise durch Inertgas (Abgas) ersetzt werden können. Die Entstehung schnell brennender lokaler Zonen mit hohem Sauerstoffanteil, die überproportional zur NOx-Bildung beitragen, werden erfindungsgemäß vermieden. Diese Besonderheit ist besonders beim direkteinspritzenden Ottomotor von Bedeutung, um hier das Potential der inneren Abgasruckführung moglichst weitgehend ausnutzen zu konnen.

Die Erfindung wird anhand eines Ausführungsbeispiels und Figuren näher beschrieben.

Es zeigen
- Figur 1:: einen Brennverlauf gemäß dem Stand der Technik (Swirlkonzept),
- Figur 2:: den erfindungsgemäßen Brennverlauf (Tumblekonzept);
- Figur 3: eine graphische Darstellung der beiden Konzepte; und
- Figur 4:: eine Gesamtdarstellung des erfindungsgemäßen Konzepts.

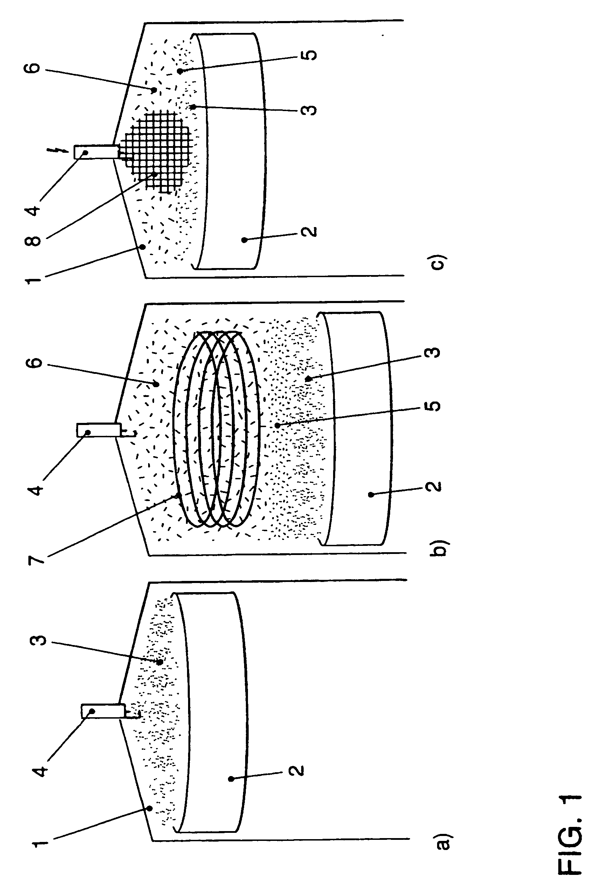

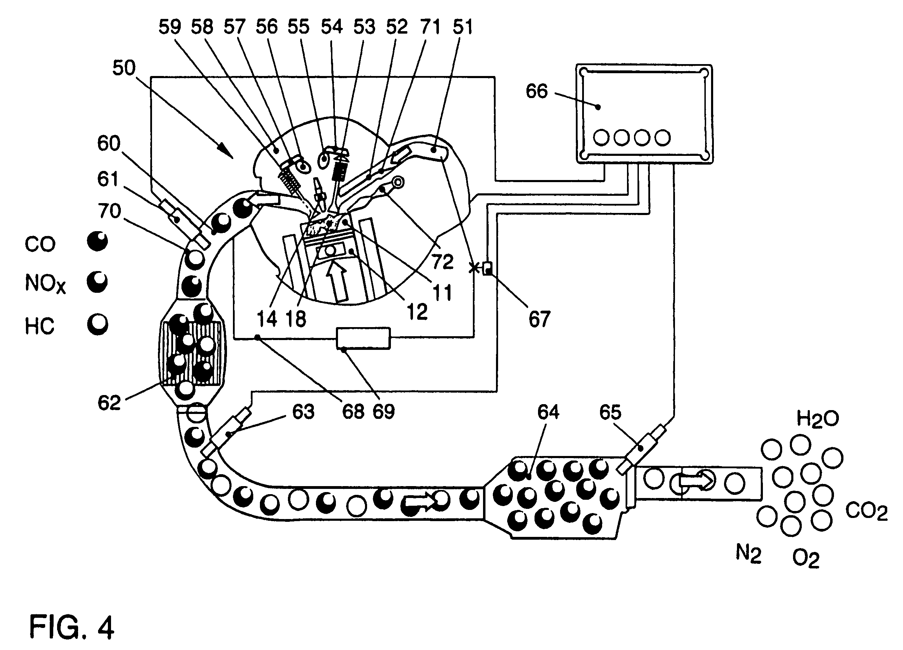

Erfindungsgemäße Untersuchungen zeigten, daß die Vermischung der Frischluft 6 mit dem im Brennraum 1 (Fig. 1a, Kolben 2 ist oben, durch gleichzeitig geöffnete Ein- und Auslaßventile (Fig 4) verbleibt Abgas 3 im Brennraum 1) verbliebenen Abgas 3 der inneren Abgasrückführung bei der Swirlvenrwirbelung 7 (Drallachse im wesentlichen zur Kolbenbewegung/Zylinderachse ausgerichtet) suboptimal ist. Das Restgas 3 der inneren EGR verbleibt während des Ansaug- und Verdichtungstaktes (Fig. 1b/c) durch die Wirkung der Swirlströmung 7 in Kolbenbodennähe, das angesaugte (überwiegend Frischluft enthaltende) Frischgas 3 wird anschließend im Ansaugtakt (Fig. 1b, Kolben 2 fahrt nach unten) über das Restgas 3 geschichtet. Da die swirlförmige Gasbewegung 7 nur wenig Impulse in Richtung der Kolbenbewegung aufweist, wird diese Schichtung (ohne wesentliche Durchmischung) während der Verdichtung weitgehend aufrecht erhalten (Fig. 1c Kolben fährt nach oben). Der gegen Ende der Verdichtung eingespritzte Kraftstoff 8 (Einspritzdüse nicht dargestellt) wird teilweise in fast reine Frischluft 6, teilweise in inhomogene Mischzonen 5 mit wechselnden Frischluft-Restgas-Verhaltnissen und teilweise in nahezu reines Restgas 3 eingespritzt (Fig 1c). Wahrend der Umsetzung (gezündet durch Zündkerze 4) können somit in der Flammfront Restgasanteile von nahe 0 % bis nahe 100 % auftreten, nur in kleinen Bereichen des Brennraums 1 liegt lokal der annähernd optimale Restgasanteil vor, obwohl der globale Restgasanteil durchaus dem Soll-Vorgaben entsprechen kann. In den Zonen mit keinem oder geringem Restgasanteil verbrennt der Kraftstoffanteil schnell und bei hohen Temperaturen, so daß hier keine nennenswerte NOx-Minderung auftritt. In den Zonen mit sehr hohem Restgasanteil bricht die Kraftstoffumsetzung zusammen, so daß das Abgas neben einer nur geringen NOx-Minderung erhöhte HC-Emissionen und eine Verminderung der abgegebenen Arbeit aufweisen kann. Daneben kann ein Verbrauchsanstieg sowie eine Laufruheverschlechterung auftreten, die zu einer Rücknahme der Sollvorgabe für die Abgasrückführrate führen und damit das NOx-Minderungspotential weiter einengen. Grundsätzlich ist es auch bei der Swirlbewegung zwar möglich diese Schichtung zu berücksichtigen, indem beispielsweise der Kolbenboden so ausgebildet wird, daß entweder bei der Kompression wieder eine Verwirbelung eintritt oder der eingespritzte Strahl in einen möglichst homogenen Bereich gelangt, erfindungsgemäß hat sich jedoch herausgestellt, daß durch Umstellung auf den Tumbledrall bessere, d. h. niedngere NOx-Emissionswerte, insbesondere in Verbindung mit einem NOx-Sensor, erreicht werden können.

Die entstehenden höheren HC- und NOx-Emissionen können je nach Abgaskonzept, insbesondere durch selektive katalytische Reduktion, d. h. gegenseitige Reduktion und Oxidation, vermindert werden, so daß insgesamt wieder relativ niedrige Abgasemissionswerte erreicht werden können, dennoch geht dies zu Lasten des Verbrauchs und der Laufruhe der Brennkraftmaschine.

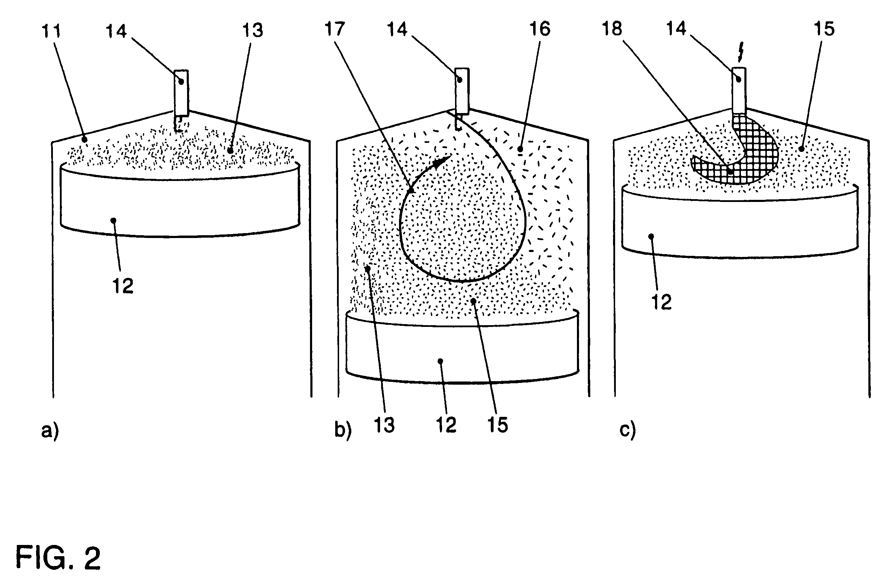

Wie in Fig. 2 dargestellt, erfolgt erfindungsgemäß auch eine innere Abgasrückführung (wie in Fig 1) über Verstellung der Einlaß-Nockenwelle jedoch mit einem Tumble-Ladungsbewegungskonzept 17 (die Rotationsachse des angesaugten Gases liegt weitgehend quer zur Kolbenbewegung). Zu Beginn des Ansaugtaktes (Fig. 2a, Kolben 12 ist oben) befindet sich ebenso wie bei Fig. 1a ein hoher Restgasanteil 13 im Zylinderraum 11 Gegenüber dem Stand der Technik weist das erfindungsgemäße Verfahren jedoch den Vorteil auf, daß die anschließende Ladungsbewegung (Fig. 2b) zu einer intensiven Durchmischung des Restabgasanteils 13 mit dem angesaugten Frischgas 16 (gegebenenfalls angereichert mit Abgas durch die äußere Abgasrückführung) führt. Wie aus Fig. 2c ersichtlich, trifft der eingespritzte Kraftstoff 18 somit auf ein Gasgemisch, dessen lokaler Restgasanteil nur wenig vom durchschnittlichen (globalen) Restabgasanteil abweicht (weitgehend homogene Mischung 15) Dies verhindert ein Erlöschen der Flamme (gezündet über Zündkerze 14) aufgrund zu hoher lokaler Restabgasanteile und führt gleichzeitig zu einer idealen NOx-Minderung im Rohabgas ohne Verschlechterung der HC-Emissionen bei hoher Laufruhe und niedrigem Verbrauch Hierdurch können höhere Soll-Vorgaben für den Restabgasanteil im Frischgas gesetzt werden.

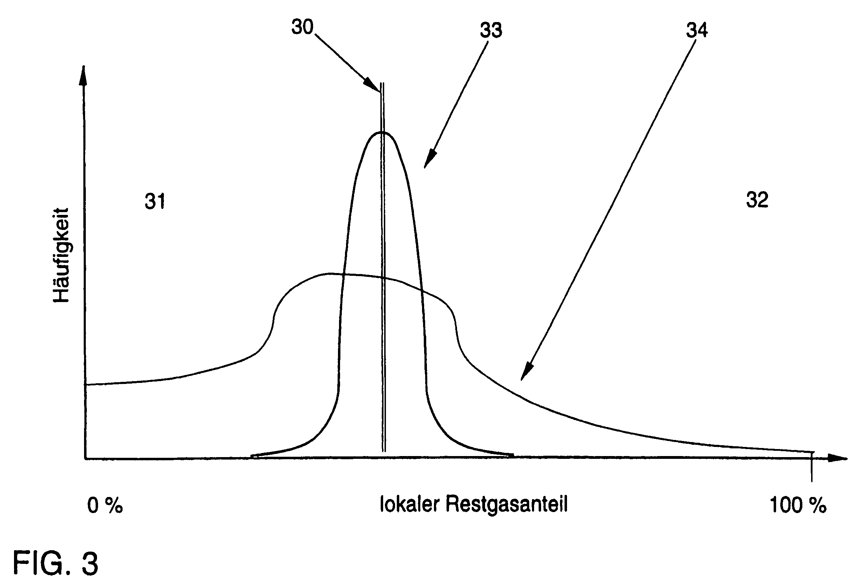

Dies ist in Fig. 3 dargestellt, aus der die geringere Streuweite der lokalen Abweichung des Restabgasanteils im Brennraum ersichtlich ist. Mit 30 ist der globale Restabgasanteil im Brennraum dargestellt. 31 zeigt den unerwünschten Bereich zu geringer NOx-Minderung (zu viel O₂), 32 zeigt den unerwünschten Bereich mangelnder Kraftstoffumsetzung (CO/HC-Entstehung, zu viel Abgas). Kurve 33 steht für das Tumblekonzept, Kurve 34 zeigt höhere Inhomogenität beim Swirlkonzept. Erfindungsgemäß wird auch bei einer hohen Abgasrückführungsrate eine lokale Überschreitung des maximal zulässigen Restabgasanteiles beim Tumblekonzept weitestgehend vermieden.

Das in Fig. 4 dargestellte Gesamtkonzept zeigt einen Ausschnitt aus der Brennkraftmaschine 50, die einen Frischlufteinlaßkanal 51 aufweist, durch den im Schichtladungsbetrieb die einströmenden Frischgase zusammen mit über eine Abgasrückführungsleitung 68 zurückgeführten Abgasen über ein Tumbleblech 52 in einer Tumbleströmung 17 in den Brennraum 11 gelangt sind. Die rückgeführten Abgase werden über ein Ventil 67 von der Motorsteuerung 66 entsprechend den Betriebsbedingungen kontrolliert und werden zudem über einen EGR-Kühler 69 gekühlt. Dargestellt ist der Verdichtungstakt wie in Fig. 2c, in dem der Kraftstoff 18 eingespntzt wird. Die Brennkraftmaschine 50 weist weiterhin eine Einlaßnockenwelle 55 und eine Auslaßnockenwelle 56 auf, die über Schlepphebel 54 bzw. 57 die Einlaßventile 53 bzw. Auslaßventile 59 tätigen. Untergebracht sind diese im Zylinderkopf 58 Durch Offenstellung der Ventile 53 und 59 wird die Füllung des Brennraums 11 mit Abgas 13 (Fig. 2a) erreicht. Während des Kompressionsvorgangs sind die Ventile 53 und 59 geschlossen.

Nach erfolgter Verbrennung fahrt der Kolben 12 wieder nach unten und die Auslaßventile 59 werden geöffnet, so daß die Abgase 60 in den Abgaskrümmer 70 strömen. Hierbei strömen sie an einer Lambdasonde 61 vorbei, die als Breitbandlambdasonde ausgelegt ist und zur Bestimmung des Lambdawertes von fett bis mager dient. Anschließend durchströmen die Abgase 60 einen Vorkatalysator 62, der als 3-Wege-Katalysator ausgebildet ist. Hierbei können bereits CO und HC mit dem vorhandenen Sauerstoff zu CO₂ und H₂O umgesetzt werden, außerdem erfolgt eine Oxidation von NO zu NO₂ Nach dem Vorkatalysator 62 ist ein Temperatursensor 63 angeordnet, der der Überwachung (OBD) des Katalysators 62 dient. Im weiteren Verlauf strömen die Abgase in einen NOx-Speicherkatalysator 64, der die Stickoxide insbesondere absorbiert. Mit steigendem Füllgrad erfolgt ein zunehmender NOx-Schlupf durch den NOx-Speicherkatalysator 64, der von dem NOx-Sensor 65 erfaßt wird. Dieses Signal wird von der Motorsteuerung 66 dahingehend ausgewertet, daß bei Überschreitung eines bestimmten Wertes eine Regeneration des NOx-Speicherkatalysators 64 zu erfolgen hat. Dies erfolgt durch einen kurzzeitigen (bis ca. 5 sek.) Fettbetrieb der Brennkraftmaschine 50, wobei H₂, CO und HC in den NOx-Speicherkatalysator 64 gelangen und mit den unter diesen Betriebsbedingungen freigesetzten NOx zu N₂, H₂O und CO₂ reagieren. Anschließend wird wieder auf Magerbetrieb umgestellt.

Die Regeneration wie auch ein Hochlastbetrieb werden vorteilhaft unter homogenen Betriebsbedingungen der Brennkraftmaschine 50 durchgeführt, bei denen die Anströmung 71 des Tumbleblechs 52 flachgestellt wird (an die Wandung des Einlaßkanals 51 gelegt), so daß die Frischgase des Tumbleblechs 52 vorbeiströmen und hierdurch kein Tumbledrall im Brennraum 11 erfolgt.

Bei einer direkteinspritzenden Brennkraftmaschine, insbesondere einem Ottomotor, mit geschichtetem Magerbetneb und innerer Abgasrückführung ist eine NOx-reduzierende Abgasnachbehandlung mittels eines NOx-Speicherkatalysators vorgesehen. Zur Erzielung höchstmöglicher Abgasrückführungsraten bei niedrigsten HC- und NOx-Emissionswerten ist für die einströmenden Frischgase, die gegebenenfalls rückgeführtes Abgas einer äußeren Abgasrückführung enthalten können, eine Tumbleströmung vorgesehen, so daß die Drallachse der einströmenden Frischgase weitgehend quer zur Kolbenbewegung verläuft. Hierdurch wird eine emissionsmindernde optimale Vermischung des Zylinderinnenraums beim geschichteten Magerbetrieb erreicht.

## Patentansprüche

1. Direkteinspritzende Brennkraftmaschine mit
einer NOx-reduzierenden Abgasnachbehandlung,
einer inneren Abgasrückführung,
einem geschichteten Magerbetrieb und
einem Drall im einströmenden Frischgas,
mit einer überwiegend quer zur Kolbenbewegung verlaufenden Drallachse
**dadurch gekennzeichnet, dass** Mittel vorgesehen sind, die durch Ladungsbewegung eine Durchmischung des Restabgasanteils mit dem angesaugten Frischgas erfolgten lassen.

2. Brennkraftmaschine nach Anspruch 1, **dadurch gekennzeichnet, dass** der Drall eine Tumblebewegung ist.

3. Brennkraftmaschine nach Anspruch 1 oder 2, **dadurch gekennzeichnet, dass** der Drall durch ein Tumbleblech im Ansaugkanal erzeugt ist.

4. Brennkraftmaschine nach einem der vorhergehenden Ansprüche, **dadurch gekennzeichnet, dass** sie fremdgezündet bzw. ein Ottomotor ist.

5. Brennkraftmaschine nach einem der vorhergehenden Ansprüche, **dadurch gekennzeichnet, dass** sie zusätzlich eine äußere Abgasrückführung hat.

6. Brennkraftmaschine nach Anspruch 5, **dadurch gekennzeichnet, dass** die äußere Abgasrückführung gekühlt und/oder mit einem Regelventil versehen ist.

7. Brennkraftmaschine nach einem der vorhergehenden Ansprüche, **dadurch gekennzeichnet, dass** die Drallachse im Bereich 75° bis 105° zur Kolbenbewegung liegt.

8. Brennkraftmaschine nach einem der vorhergehenden Ansprüche, **dadurch gekennzeichnet, dass** die Abgasnachbehandlung mittels eines NOx-Speicherkatalysators erfolgt.

9. Brennkraftmaschine nach einem der vorhergehenden Ansprüche, **dadurch gekennzeichnet, dass** die Abgasnachbehandlung durch einen NOx-Sensor kontrolliert erfolgt.

10. Brennkraftmaschine nach einem der vorhergehenden Ansprüche, **dadurch gekennzeichnet, dass** die innere Abgasrückführung durch Verstellen der Einlassventilöffnungszeiten in Richtung früh erfolgt.

## Claims

1. Direct-injection internal combustion engine, having
NOx-reducing exhaust-gas aftertreatment,
internal exhaust gas recirculation,
layered lean-burn operation, and
turbulence in the fresh gas flowing in,
having a turbulence axis which runs predominantly
transversely with respect to the piston movement,
**characterized in that** means are provided which, by charge movement, cause the residual exhaust-gas fraction to be mixed with the fresh gas intake.

2. Internal combustion engine according to Claim 1, **characterized in that** the turbulence is a tumbling motion.

3. Internal combustion engine according to Claim 1 or 2, **characterized in that** the turbulence is generated by a tumble plate in the induction duct.

4. Internal combustion engine according to one of the preceding claims, **characterized in that** it is a spark-ignition engine.

5. Internal combustion engine according to one of the preceding claims, **characterized in that** it additionally has external exhaust gas recirculation.

6. Internal combustion engine according to Claim 5, **characterized in that** the external exhaust gas recirculation is cooled and/or provided with a control valve.

7. Internal combustion engine according to one of the preceding claims, **characterized in that** the turbulence axis lies in the range from 75° to 105° with respect to the piston movement.

8. Internal combustion engine according to one of the preceding claims, **characterized in that** the exhaust-gas aftertreatment takes place by means of an NOx storage catalytic converter.

9. Internal combustion engine according to one of the preceding claims, **characterized in that** the exhaust-gas aftertreatment is controlled by an NOx sensor.

10. Internal combustion engine according to one of the preceding claims, **characterized in that** the internal exhaust gas recirculation takes place by adjusting the intake-valve opening times towards early.

## Revendications

1. Moteur à combustion interne à injection directe comprenant
un post-traitement de gaz d'échappement réduisant les NOx,
une recirculation interne des gaz d'échappement,
un fonctionnement en mélange pauvre en couches et
un tourbillon dans le gaz frais affluant,
avec un axe de rotation s'étendant essentiellement transversalement au déplacement du piston,
**caractérisé en ce que** des moyens sont prévus, lesquels permettent d'effectuer, par déplacement de charge, un mélange de la proportion de gaz d'échappement résiduaire avec le gaz frais aspiré.

2. Moteur à combustion interne selon la revendication 1, **caractérisé en ce que** la rotation est un déplacement tourbillonnant.

3. Moteur à combustion interne selon la revendication 1 ou 2, **caractérisé en ce que** la rotation est produite par une tôle de tourbillonnement dans le conduit d'admission.

4. Moteur à combustion interne selon l'une quelconque des revendications précédentes, **caractérisé en ce qu'**il fonctionne par allumage commandé ou qu'il s'agit d'un moteur à allumage par étincelles.

5. Moteur à combustion interne selon l'une quelconque des revendications précédentes, **caractérisé en ce qu'**il a en outre une recirculation extérieure de gaz d'échappement.

6. Moteur à combustion interne selon la revendication 5, **caractérisé en ce que** la recirculation extérieure de gaz d'échappement est refroidie et/ou est pourvue d'une soupape de régulation.

7. Moteur à combustion interne selon l'une quelconque des revendications précédentes, **caractérisé en ce que** l'axe de rotation est compris dans la plage de 75° à 105° par rapport au déplacement du piston.

8. Moteur à combustion interne selon l'une quelconque des revendications précédentes, **caractérisé en ce que** le post-traitement de gaz d'échappement s'effectue au moyen d'un catalyseur d'accumulation de NOx.

9. Moteur à combustion interne selon l'une quelconque des revendications précédentes, **caractérisé en ce que** le post-traitement de gaz d'échappement s'effectue de manière contrôlée par un capteur de NOx.

10. Moteur à combustion interne selon l'une quelconque des revendications précédentes, **caractérisé en ce que** la recirculation interne de gaz d'échappement s'effectue par décalage des temps d'ouvertures de la soupape d'admission dans le sens d'une avance.
